# EUROPEAN PATENT APPLICATION

(11) **EP 1 376 989 A2**
(43) Date of publication of application: **02.01.2004**
(21) Application number: 03254133.6
(22) Date of filing: 28.06.2003
(51) Int. Cl.: H04L 29/06

(54) **Method and apparatus for determination of device capabilities on a network**

(30) Priority: 28.06.2002 US 392383 P; 28.10.2002 US 282557
(71) Applicant: Openwave Systems Inc., Redwood City, CA 94063 (US)
(72) Inventor: Kjellberg, Rikard M., Santa Cruz, California 95062 (US)
(74) Representative: W.P. Thompson & Co.

(57) **Abstract**

The disclosed system determines capabilities of client devices on a network to facilitate responses to requests from the client devices. The system attempts to use information in or associated with a request, such as a session identifier or a header of the request, to search for matching information in a device capabilities database (401). If found, the system maps the information to a set of stored device capabilities of the client device. If the system is unable to find an exact match for the information, the system attempts to find an approximate match (402,403). If an approximate match is found, the system takes the stored device capabilities associated with the stored matching information to be the capabilities of the client device. The new association is then recorded for future use (405). Any capabilities specified in the request are also added to the set of stored capabilities associated with the client device.

## Description

This application claims the benefit of U.S. Provisional Patent application no. 60/392,383, filed on June 28, 2002, entitled, "Device Manager," which is incorporated herein by reference

### FIELD OF THE INVENTION

At least one embodiment of the present invention pertains to computer networks, and more particularly, to a system that determines capabilities of client devices making requests to servers in a network of computers.

### BACKGROUND

On a computer network, devices known as clients make requests to other devices, known as servers, for various purposes. There are numerous types of devices that can act as clients on a network, such as personal computers (PCs) and workstations, as well as mobile hand-held devices, such as cellular telephones, personal digital assistants (PDAs), two-way pagers, etc. The particular response that a server returns to a client may depend upon various factors, including the capabilities of the client device. Other factors may also affect the response, such as preferences of the user initiating the request, privileges of the user, location, date, time of day, etc.

The "capabilities" of a device may include, for example, physical or functional characteristics of the device's hardware or software, such as its processing power (e.g., speed or processor type), amount of available memory, software versions, display device characteristics, communications protocols, etc. Consider how a device's capabilities can affect the response it receives to a request: With current technology, a cellular telephone can request and receive a web page but may not be able to display the web page in its original format, as a PC could, due to the smaller display of the cellular telephone. As a result, it may be necessary for an intermediary server to alter (transcode) the format of the requested web page to one that is compatible with the cellular telephone, before providing the web page to the cellular telephone. This is just one of many possible ways in which device capabilities can affect the response.

Currently, certain techniques are sometimes used to identify the capabilities of a device sending a request on a network. For example, at least some capabilities of the device may be specified in the request. In the context of hypertext transfer protocol (HTTP), this is sometimes done by specifying the capabilities in a special header in the request. Or, the device characteristics of a particular device may be obtained from the device manufacturer and stored in advance in a capabilities database. When a request is received from that device, it may be possible to use information in the request, such as a device identifier, to match the request to the stored capabilities information for that device.

Frequently, however, it is not possible to directly match the requesting device with any stored capabilities information. For example, often there is no information in the request that exactly matches any information stored in the capabilities database. This problem is becoming more significant as more and more client devices of various new types, brands, and models are continually introduced into the market and used by consumers.

### SUMMARY OF THE INVENTION

The present invention includes a method and an apparatus, in which a request is received from a client device on a network, and in response to the request, device capabilities of the client device are identified by using information which neither specifies device capabilities nor directly identifies the client device to associate a set of stored device capabilities with the client device.

Other features of the present invention will be apparent from the accompanying drawings and from the detailed description which follows.

### BRIEF DESCRIPTION OF THE DRAWINGS

One or more embodiments of the present invention are illustrated by way of example and not limitation in the figures of the accompanying drawings, in which like references indicate similar elements and in which:
Figure 1 shows an example of a network environment in which a system that determines device capabilities can be implemented;
Figure 2 shows an example of a system that determines device capabilities;
Figure 3 shows an example of the organization of information storage in the system;
Figure 4 shows an overall process of determining device capabilities in response to a request from a client device;
Figure 5 shows a process of building a request context from device attributes;
Figure 6 shows a process of building a Request Context from user identity attributes;
Figure 7 shows a process of updating a Recently Used Device table;
Figure 8 shows an architecture of the system for determining device capabilities in a clustered embodiment; and
Figure 9 is a high-level block diagram of a processing system representative of any of the processing systems described herein.

### DETAILED DESCRIPTION

A method and apparatus are described for searching for and locating device capabilities information in an environment in which exact matches of identifying information are infrequent. Note that in this description, references to "one embodiment" or "an embodiment" mean that the feature being referred to is included in at least one embodiment of the present invention. Further, separate references to "one embodiment" or "an embodiment" in this description do not necessarily refer to the same embodiment; however, such embodiments are also not mutually exclusive unless so stated, and except as will be readily apparent to those skilled in the art from the description. For example, a feature, structure, act, etc. described in one embodiment may also be included in other embodiments. Thus, the present invention can include a variety of combinations and/or integrations of the embodiments described herein.

As described in greater detail below, the disclosed system is capable of determining device identity and device capabilities using information other than that which specifies device capabilities or directly identifies the device. The system attempts to use information in or associated with a request, such as a session identifier or a header of the request, to search for a matching identifier in a device capabilities database. If a matching identifier is found, the system maps the identifier to a set of stored device capabilities of the client device. If the system is unable to find an exact match, the system attempts to find a partial match. If a partial match is found, the system takes the stored device capabilities associated with the stored partially-matching identifier to be the capabilities of the client device. The new association is then recorded in the database for future use. Any capabilities specified in the request are also added to the set of stored capabilities in association with the client device.

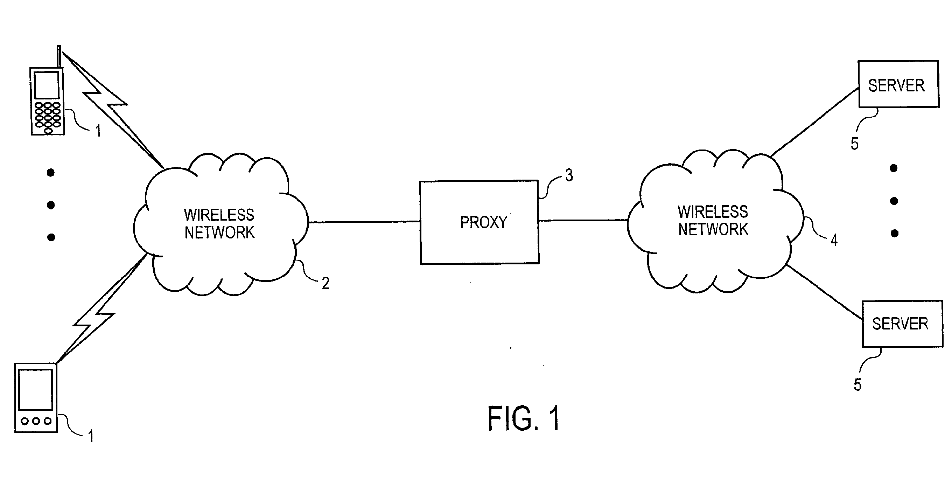

Refer now to Figure 1, which shows an example of a network environment in which the system can be implemented. A number of mobile devices 1 communicate on a wireless telecommunications network 2 (hereinafter wireless network"). Each of the mobile devices 1 can be, for example, a cellular telephone, a laptop or notebook computer, a PDA, a two-way pager, or the like. A proxy server 3 (hereinafter "proxy") is connected to the wireless network 2 and a wireline computer network 4. The proxy 3 is configured to communicate with mobile devices 1 over the wireless network 2 using, for example, HTTP or wireless access protocol (WAP), to facilitate their access to servers 5 on the wireline network 4.

Various servers 5 are connected to the wireline network 4 and are accessible to applications running on the mobile devices 1. Each of the servers 5 can be, for example, a Web server, application server, file server, or the like. The wireline network 4 can be, for example, the Internet, a private intranet or other wide area network (WAN), a local area network (LAN), or a combination of such networks. Note that to simplify description, Figure 1 shows only two of each of the mobile devices 1 and servers 5; however, the invention is not limited to any particular number of any of these devices in a given network configuration.

Each of the mobile devices 1 can act as a client for purposes of accessing any of the servers 5. Accordingly, mobile devices 1 are hereinafter referred to interchangeably as either "mobile devices" or "client devices".

The system introduced herein to determine device capabilities can be implemented in the proxy 3. In that case, a request from a client device may be provided to the system to determine device capabilities when the request is received by the proxy as part of the normal request/response process. Alternatively, the system can be implemented in a device other than a proxy, or as a stand-alone system connected to a network. Furthermore, while the system is particularly useful for determining capabilities of mobile devices on a wireless network, the system can also be used to determine capabilities of other types of devices, such as conventional PCs or workstations (not shown), which may operate on a wireline network. Thus, the system does not have to be used in conjunction with mobile devices or a wireless network; the system can be used to determine capabilities of virtually any type of device and a used In conjunction with virtually any type of data network or combination of networks.

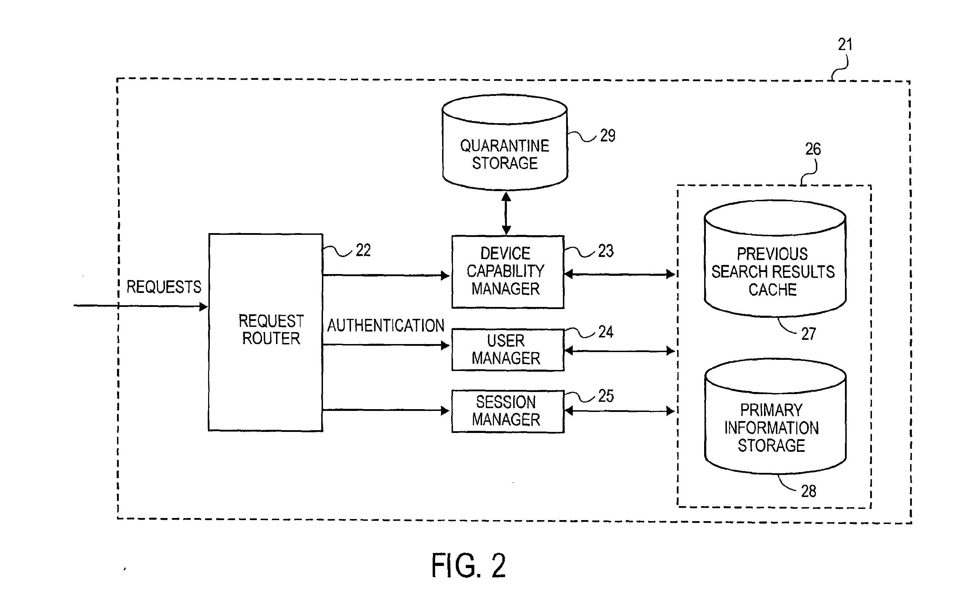

Figure 2 shows an example of the system, according to certain embodiments of the invention. As noted, the system 21 can be implemented in a proxy, such as proxy 3 in Figure 1. As shown, the system 21 includes a request router 22, a device capability manager 23, a user manager 24, a session manager 25, a database 26 and quarantine storage 29. The database 26 includes a primary information storage 28 and a previous search results cache 27, each of which stores device capabilities information and other related information.

Incoming requests from client devices are routed appropriately by the request router 22 to the device capability manager 23, the user manager 24 or the session manager 25. In general, the device capability manager 23 is responsible for mapping incoming requests to set of device capabilities stored in the database 26. A set of device capabilities is contained in an entity referred to as a Request Context, as described further below. The user manager 24 is responsible for authenticating users of client devices and establishing user identity. The session manager 25 is responsible for managing user sessions, including assigning a session identifier to each session. Each session is given a unique session identifier that can be used by the system to obtain access to session data.

The requests that the system 21 receives from a client device hold attributes that can be used to determine the capabilities of the device and its user. The capabilities of the device are represented by a set of data referred to as a Request Context, and the attributes are represented in a set of data referred to as a Request Attribute Set (RAS). A Request Context is assembled by analyzing information in a request. To locate a Request Context, the RAS produces an identifier, i.e. an RAS Identifier, that can be matched against keys in the cache and the primary information storage. An RAS has the following characteristics:
- It can be used to generate an RAS Identifier based on the various attributes and values in the request.
- During an exact matching attempt, the RAS Identifier will either point to exactly one Request Context or result in a null result.
- Several unique RAS Identifiers can point to the same Request Context.

All attributes that are considered aspects of the capabilities of a device are combined in a corresponding Request Context. The system can also reply to a request with a request for additional information, such as a login screen or a question to the user that will assist in building a comprehensive Request Context.

To start building a Request Context, the system first assembles an RAS. The RAS holds any attributes of a request that may help in determining the Request Context (device capabilities). Examples of such attributes are: contents of the request's headers, contents of the body of the request, Internet Protocol (IP) address and port, session identifier, or information that may be part of the request itself, such as a Uniform Resource Identifier (URI) in an HTTP request. Once assembled, the RAS holds a number of attribute-value pairs, which will be used as the key for locating the Request Context in the database.

Each RAS has an associated RAS Identifier. When attempting to determine device capabilities in response to a request, the system uses an RAS Identifier derived from the request to search the database 26 for a matching RAS Identifier, associated with which is a corresponding Request Context also stored in the database 26. If a matching RAS identifier is found, the corresponding Request Context contains the capabilities of the requesting device.

It is likely, however, that only a partial match for the RAS Identifier being searched for will be found. Such partial (i.e., non-exact, or approximate) matches can be detected by using a technique known as regular expression matching, for example, which is a well-known technique for searching information sources. Any time a Request Context is derived through a non-exact match (using regular expression, for example), the system will register that fact by storing the RAS and corresponding Request Context in the quarantine storage, so that a system administrator can complement the information source in order to improve the matching capability in the future. For any given RAS, the system will register non-exact matches only once in the quarantine storage, even though the same RAS may be produced later. For any given RAS, the regular expression matching will only occur the first time the RAS is encountered (since a partial match will cause a new entry to be created in the database 26).

It is useful now to consider the individual storage facilities in Figure 2 and how they are used. The Primary Information Storage 28 represents the "true" source of all information available for setting up a Request Context. Searches in this store can be done using both exact matching and regular expression matching. This store is typically maintained on secondary (nonvolatile) storage in order to provide persistence.

The Previous Search Results cache 27 holds RASs and corresponding Request Contexts. This storage is typically maintained in system memory for performance reasons. Since it is kept in memory, it is also volatile. Searches in this store are always based on exact matching only. The Previous Search Results cache 27 provides a direct association of RAS Identifiers to Request Contexts (device capabilities), thereby providing a very efficient way to access device capability information in real-time.

Note that the way to RAS is used as a key in the Primary Information Storage 28 differs from how the RAS is used as a key in the Previous Search Results cache 27. While regular expression matching can be used to locate a Request Context in the Primary Information Storage 28, only exact matching can be used to locate a request context in the cache 27.

The Quarantine 29 holds RASs and corresponding Request Contexts from all searches that had to apply regular expression matching in the past. However, searches performed in this store are always based on exact matching only.

The RAS and the request context will now be described in greater detail. The RAS holds all attributes that can be used to find and assemble a Request Context. The internal structure of the Request Context is implementation-dependent and is not germane to the present invention. However, the device capability manager 23 will provide a unique RAS Identifier for every unique attribute set (RAS), for exact matching with keys in the various storages mentioned above. The RAS Identifier is typically assembled from values in the RAS of a request.

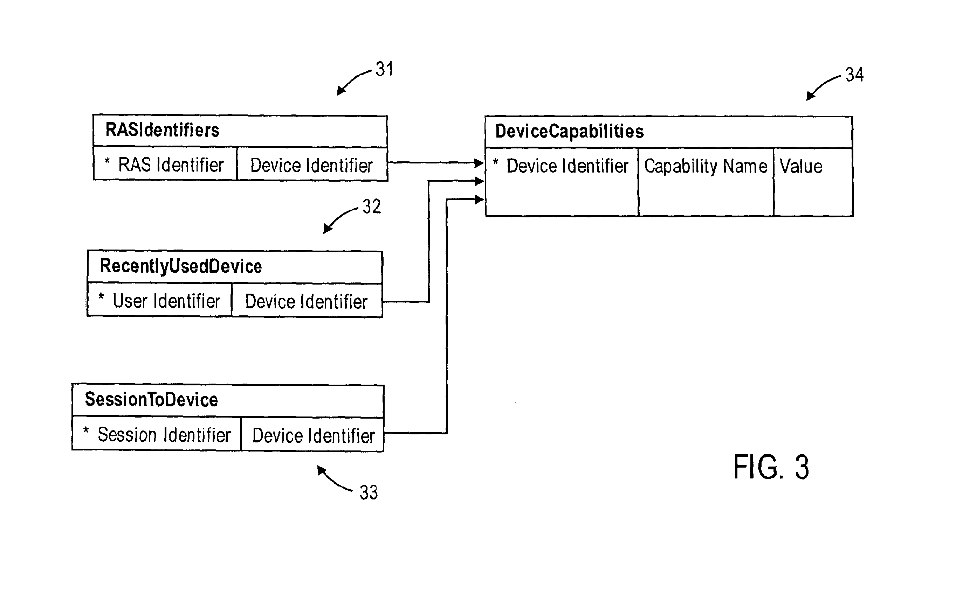

The organization of information storage In the system 21 is described now, according to certain embodiments, as shown in Figure 3. The system 21 uses four tables, i.e., an RAS table 31, a Recently Used Device table 32, a Session to Device table 33 and a Device Capabilities table 34. The RAS table 31 associates a unique RAS Identifier with a unique Device Identifier. The Device Identifier is used as a key into the Device Capabilities table 34. Several RAS Identifiers can point to the same Device Identifier.

The Device Capabilities table 34 contains the Request Context, in that it associates a Device Identifier with one or more Capability Name-Value pairs. A search in this table will return a set of Capability Name-Value pairs.

The Recently Used Device table 32 associates a unique User Identifier with a Device Identifier. This table is used as follows:
- If the system 21 was able to retrieve a Request Context from the cache 27 or from the Primary Information Storage 28 and the User identifier does not exist in the table 32, an entry is added to this table.
- If the Recently Used Device table 32 holds the User Identifier, but the stored Device Identifier is other than the one in the table 32, the old entry is replaced with a new one.
- All entries are tagged with a timeout value. A housekeeper program will traverse the table 32 and decrement timeouts. Entries for which the timeout has expired are removed from the table 32.
- If a request only holds User Identity, the table 32 is used to retrieve the Device Identifier and Request Context.

The Session To Device table 33 associates a Session Identifier with a Device Identifier. This could be part of a larger Session Context in a given implementation.

Any request that the system 21 receives from a client devices has one or more of the following properties:
- The request can directly point to a Device Identifier and capability set by providing a special identifier. In the case of HTTP requests, this identifier is normally called UAProf.
- The request can indirectly point to a capability set by an identifier that identifies the application that the device is using to make requests. In the case of HTTP, this is normally called the User-Agent header.
- The request can specify its capabilities directly in the request. In the case of HTTP, this is normally called an Accept headers.
- There may be information in the request that uniquely and indirectly identifies the user. In the case of HTTP, this could be the originating IP address and port or a special header attached to the request. This information to could also be an HTTP session identifier or other session identifier included in the request, such as the one provided through an application server.

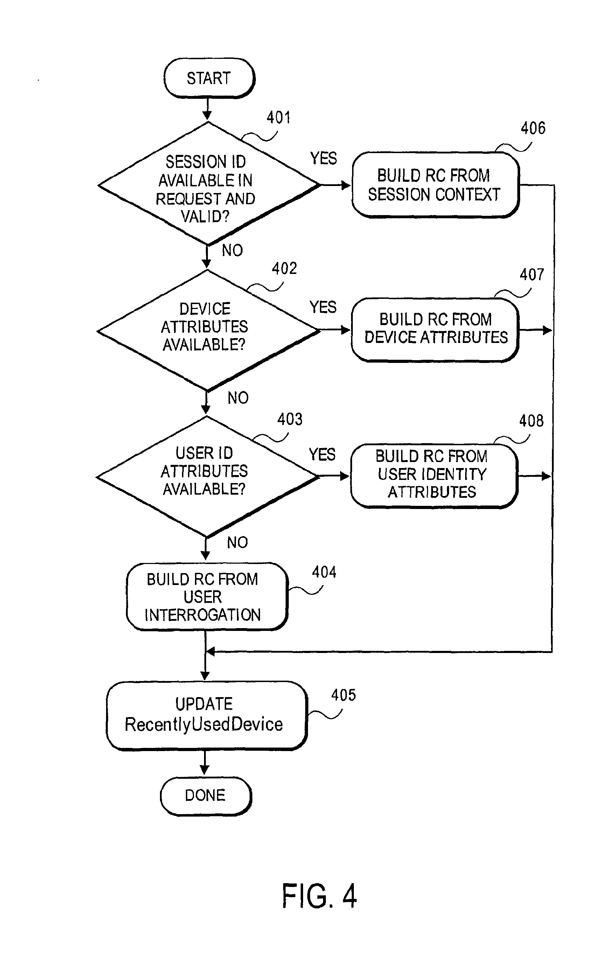

Figure 4 shows an overall process that can be performed by the system to determine device capabilities in response to a request from a client device, according to certain embodiments of the invention. In response to receiving a request, at block 401 the system 21 determines whether any Session Identifier is available in the request, and if so, whether it refers to a valid/current session. If so, the system 21 uses the Session Identifier to look up the stored Request Context (i.e., to look up the device capabilities in the Device Capabilities table 34 using the Device Identifier associated with the Session Identifier). The Session Identifier is used as a key into a session cache. Each session has a session context that also holds a previously assembled Request Context. As soon as a session has been established, this mechanism removes the need for further investigation for purposes of determining device capabilities.

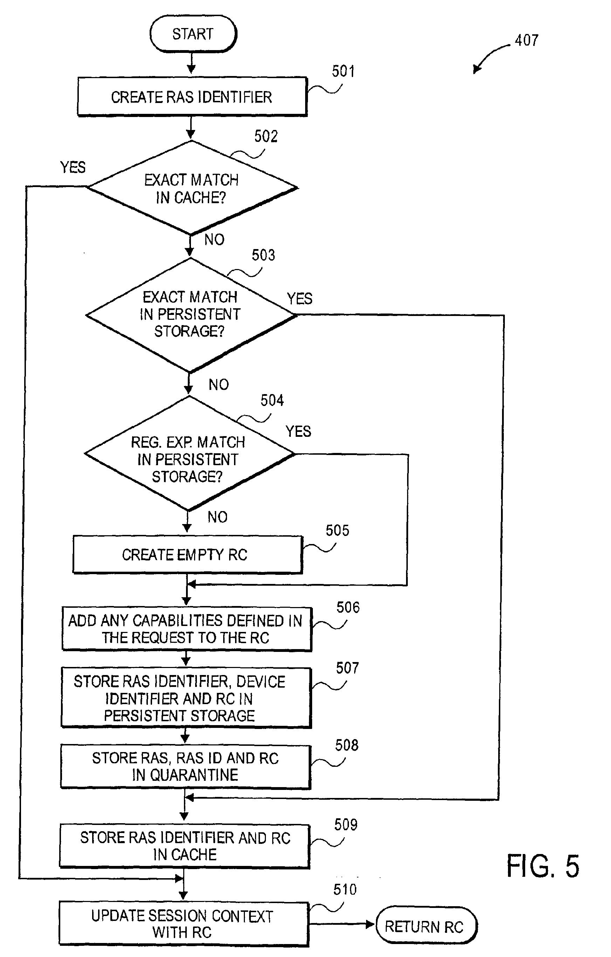

If there is no valid Session Identifier, then at block 402 the system 21 evaluates the request to see if it contains any attributes that would provide a hint about the device that is making the request. Examples of such attributes in HTTP are:
UAProf header, UAProf-Diff headers, User-Agent header, and Accept headers. If any combination of the foregoing attributes is found, the system proceeds to build the Request Context from those attributes, as described further below in connection with Figure 5.

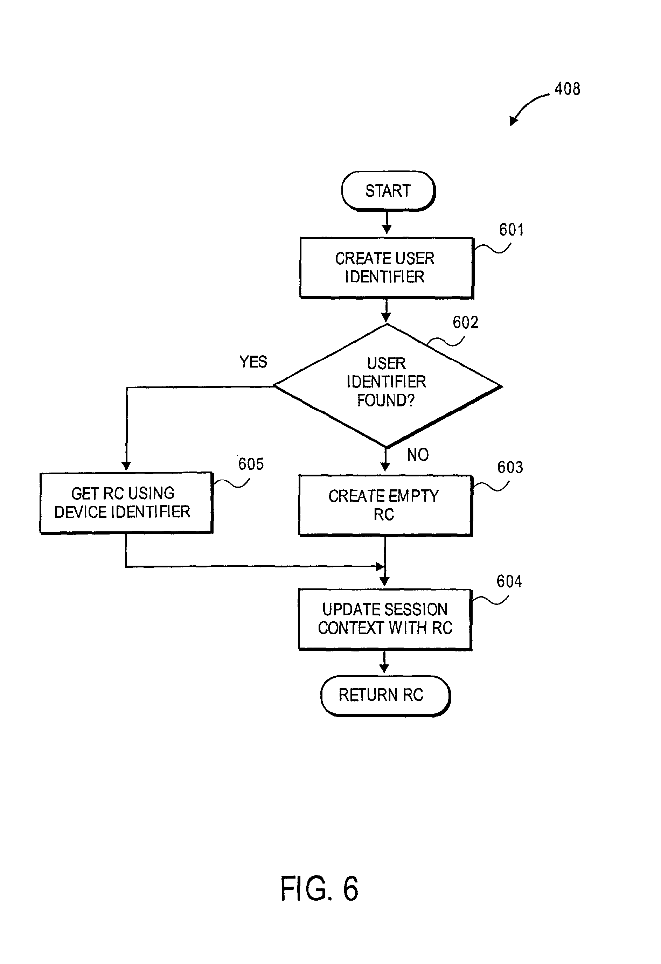

If no such information is found in the request, then at block 403 the system 21 looks for user identity instead. An example of a system that does not provide any device information is the Short Message Service (SMS). Interfaces to SMS Centers typically only provide the originating telephone number (MSISDN), which can be used for identifying the user. If there are any attributes in the request that can help identifying the user, then at block 408 the system 21 uses those attributes to look up corresponding Device Identifier, which is used to look up a corresponding request context, as described further below in connection with Figure 6 below.

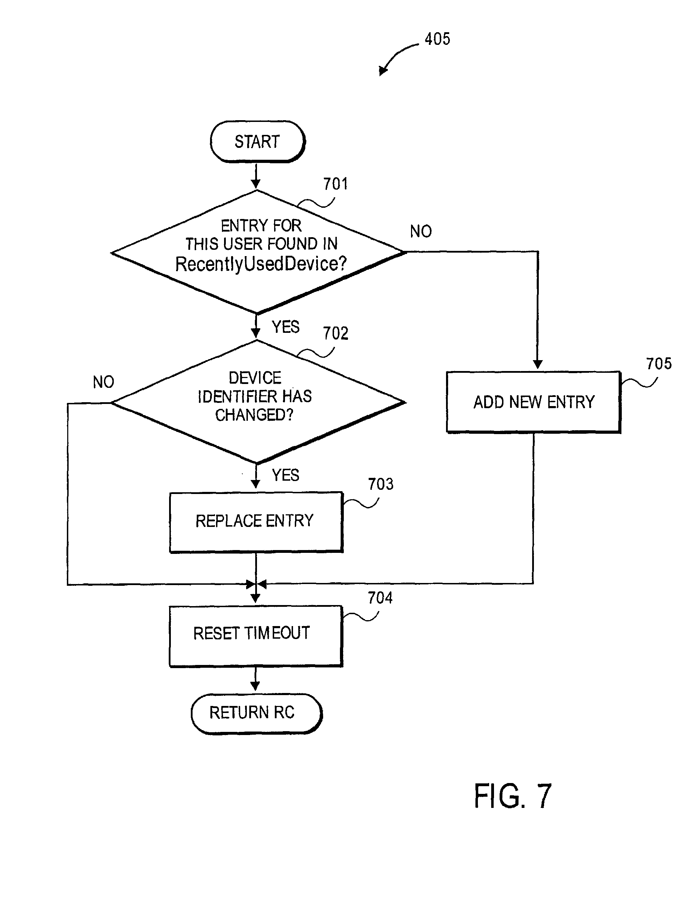

If there are no user identity attributes available, then as a last resort, at block 404 the system 21 sends a response back to the requestor, asking it to specify a Device Identifier from a list of supported devices. The resulting client response is analyzed as if the request included device attributes. Finally, at block 405 the system 21 updates the Recently Used Device table 32, to ensure that it contains current information that indicates the most recently used device for the current user. This process is described further below in connection with Figure 7. This information can be subsequently used to indirectly determine which device the user may be using if no other information is available.

The foregoing process ensures that:
- Regular expression matching is done only once for any given RAS.
- The cache 27 is populated with potentially frequently requested Request Contexts, mapped by keys to RAS Identifiers.
- If the system 21 should fail and be restarted, it will restore the state of the cache 27 over time, as new requests are processed.

Figure 5 shows in greater detail the process of building a request context from device attributes (block 407 in Figure 4), according to certain embodiments of the invention. Initially, at block 501 the system 21 creates an RAS Identifier. The algorithm for creating the RAS Identifier is implementation specific. Although many possible algorithms can be used to create an RAS identifier from a request, the following algorithm is one example:
1. If the request holds a UAProf header, it becomes the RAS Identifier;
2. otherwise, if the request holds a User-Agent header, it becomes the RAS Identifier;
3. otherwise, if the request holds Accept headers, they will be combined into an RAS Identifier.

Next, at block 502 the system 21 uses the RAS Identifier as a key to search the cache 27, such that the system 21 determines whether there is an exact match for the RAS Identifier in the cache 27. If an exact match is found, the cache 27 returns the Request Context corresponding to the matching RAS Identifier stored in the cache 27, and the process then branches to block 510. In block 510, the associated Session Context is updated with that Request Context, for use in response to feature requests.

If there is no exact match in the cache 27, then at block 503 the RAS Identifier is used as a key to search the Primary Information Storage 28, to determine if there is an exact match of the RAS Identifier. If an exact match is found in the Primary Information Storage 28, the Primary Information Storage 28 will return the corresponding stored Request Context. In that case, the process branches to block 509, in which the system 21 stores the RAS Identifier and the retrieved Request Context in the cache 27, to improve future performance.

If no exact match for the RAS Identifier is found in the Primary Information Storage 28 at block 503, then at block 504 the system 21 attempts to match the RAS Identifier using various regular expressions. The system allows more than one expression to be evaluated in a pre-defined sequence. The list of expressions is traversed until an expression yields a result or until its end. If all expressions are evaluated without successfully finding a (partial) match in the Primary Information Storage 28, an empty Request Context is created at block 505. The system 21 will always produce a Request Context, although it might be empty. If regular expression matching resulted in a partial match, then the Request Context associated with the partially matching RAS identifier in the Primary Information Storage 28 will be used.

At block 506 the system 21 adds any capabilities specified in the request itself (if any) to the Request Context produced in block 504 or 505. In the case of HTTP, the Accept header is one example of how capabilities can be included in the request. Thus, even if a Request Context was generated as a result of searching for an RAS Identifier, there may be additional attributes in the request that could be used to add capabilities to the Request Context.

At block 507 the system 21 stores the RAS Identifier, the Device Identifier and the Request Context in the Primary Information Storage 28. In this manner, any time regular expression matching has been used and resulted in a partial match, a new entry is added to the Primary Information Storage 28. In that case, the Request Context is either a copy of the profile of some other device related to the current device or simply the capabilities found in the request.

At block 508, the system 21 stores the RAS, the RAS Identifier and the Request Context in the Quarantine storage 29. Thus, any time regular expression matching has been used and resulted in a partial match, the new entry in the Primary Information Storage 28 is also quarantined so that a system administrator (either manually or automated) can validate and update the new entry later.

Following block 508, the process proceeds to blocks 509 and 510, discussed above, after which the resulting Request Context is returned to the calling entity.

Figure 6 shows in greater detail the process of building a Request Context from user identity attributes (block 408 in Figure 4), according to certain embodiments of the invention. At block 601, the system 21 creates a unique User Identifier in order to enable a search in Recently Used Device table 32. The specific algorithm for creating a User Identifier is not germane to the present invention. However, in the case of HTTP requests for example, a special header can hold information that either directly or indirectly points to the user identity. Next, at block 602, the system 21 uses the User Identifier as a key to search for an exact match with one User Identifier in the Recently Used Device table 32. If an exact match is found, then at block 605 the corresponding Request Context is fetched from the Device Capabilities table 34 using the Device Identifier. Otherwise, an empty Request Context is created at block 603. At block 604 the system 21 updates the Session Context with the Request Context, and then returns the Request Context to the calling entity.

Note that the foregoing algorithm can use a volatile cache to improve searches. In that case, the cache can include direct links between User Identifier and Request Context.

Figure 7 shows in greater detail the process of updating the Recently Used Device table 32 (block 405 in Figure 4), according to certain embodiments of the invention. At block 701, the system 21 determines whether a previous entry for the current user has been logged in the Recently Used Device table 32. If a previous entry for this user cannot be found in the Recently Used Device table 32, then a new entry with User Identity and Device Identifier is added to the table 32 at block 705, and the process branches to block 704. If a previous entry is found, then at block 702 the system 21 determines whether the new request points to a Device Identifier different from the one stored in the Recently Used Device table 32. If so, i.e., if a new Device Identifier has been detected, then at block 703 the User Identity and Device Identifier are used to replace the old entry in the Recently Used Device table. Following block 703, the system 21 resets the timeout value associated with the entry at block 704.

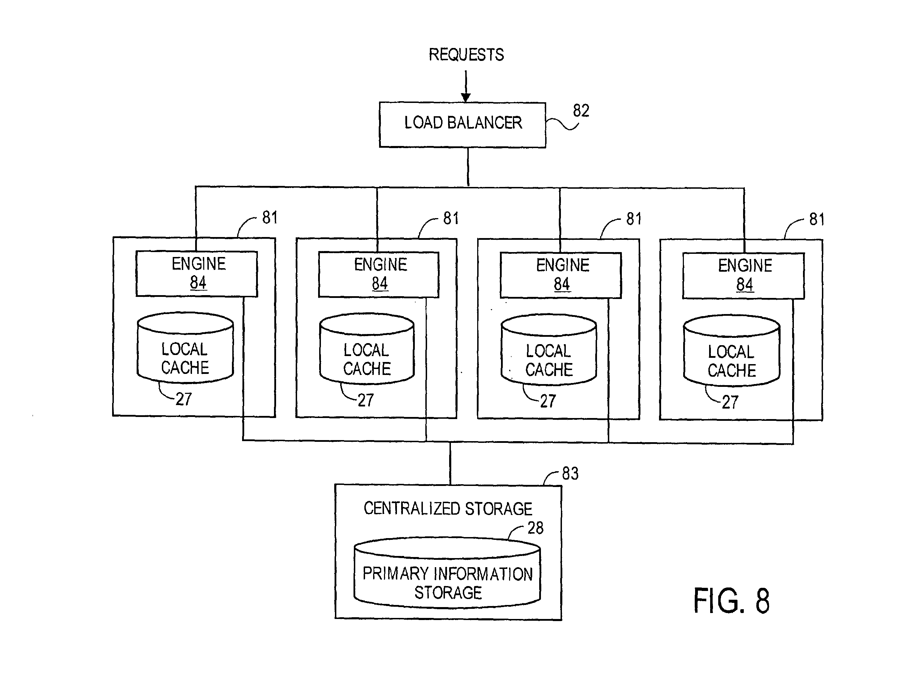

The system 21 can be implemented in a clustered environment in order to provide load balancing and to scale efficiently. Figure 8 illustrates an example of a distributed architecture for such an embodiment. In this embodiment, the system is implemented in a cluster of servers and includes a number of substantially identical nodes 81. Each node 81 corresponds substantially to the system 21 shown in Figure 2, excluding the Primary Information Storage 28. Specifically, each node 81 includes a Previous Search Results cache 27 (i.e., volatile storage) as well as an engine 84 representing the operational elements of the system described above, i.e., the device manager 23, the user manager 24 and the session manager 25. The Primary Information Storage 28 (i.e., persistent storage) is located in a centralized storage facility 83 accessible to each of the nodes 81. A load balancer 82 distributes requests appropriately to the various nodes 81.

The system of Figure 8 uses a caching scheme in which each system node 81 has a local copy of the data in its cache 27. The local cache 27 in each node 81 is automatically configured gradually over time ("lazy" configuration) as new requests are evaluated by the node. Anytime a search must be forwarded by a node 81 to the centralized storage 83, the result of the search is added to the cache 27 of that node. As a result, all of the local caches 27 are automatically synchronized with each other gradually over time (lazy synchronization). For the same reason, if a node 81 fails, its previous state is restored automatically over time. There is, therefore, no need to continuously monitor and maintain state for all nodes 81.

As will be apparent from the preceding discussion, the technique introduced above can be implemented in software, which can be executed in processing systems that have conventional hardware. Hence, each of the processing systems described above (e.g., the client devices 1, the proxy 3, the servers 5, system 21) can be conventional in terms of its hardware. Alternatively, the techniques described above can be implemented in circuitry specially designed for such purposes, or in a combination of specially designed circuitry and software executed by conventional hardware.

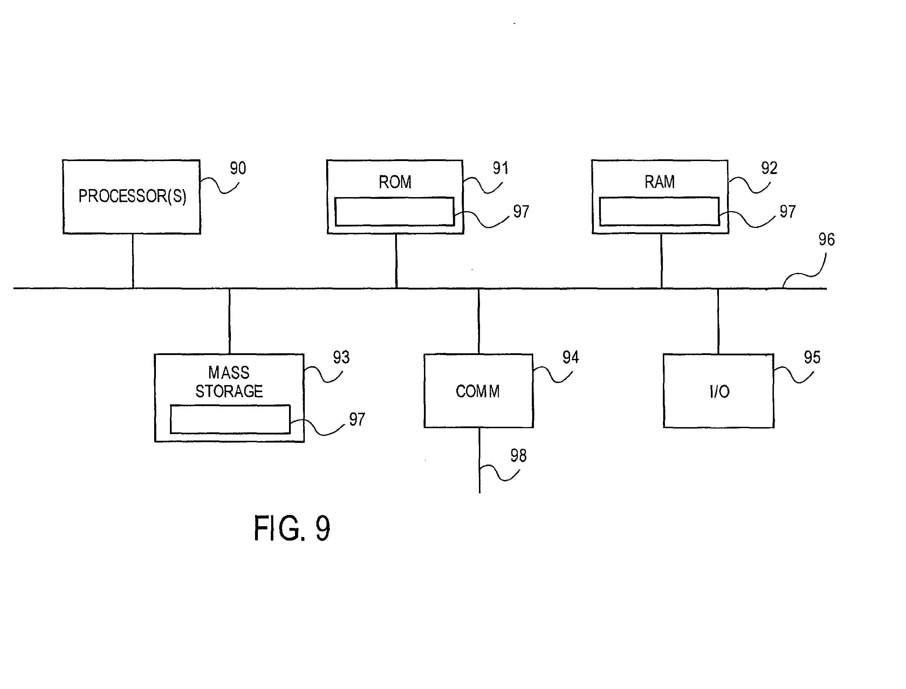

Figure 9 is a high-level block diagram of a processing system representative of any of the processing systems mentioned above. Note that Figure 9 is a conceptual representation which represents any of numerous possible specific physical arrangements of hardware components; however, the details of such arrangements are not germane to the present invention and are well within the knowledge of those skilled in the art. Also note that, in certain embodiments, some of the above-mentioned processing systems may be distributed between two or more separate physical platforms.

The processing system shown in Figure 9 includes one or more processors 90, i.e. a central processing unit (CPU), read-only memory (ROM) 91, and random access memory (RAM) 92, each connected to a data bus system 96. Also coupled to the bus system 96 are a mass storage device 93, a data communication device 94, and in some embodiments, one or more additional input/output (l/O) devices 95.

The processor(s) 90 may be, or may include, one or more programmable general-purpose or special-purpose microprocessors or digital signal processors (DSPs), microcontrollers, application specific integrated circuits (ASICs). programmable logic devices (PLDs), or a combination of such devices. The bus system 96 includes one or more buses or other physical connections, which may be connected to each other through various bridges, controllers and/or adapters such as are well-known in the art. For example, the bus system 96 may include a "system bus", which may be connected through one or more adapters to one or more expansion buses, such as a Peripheral Component Interconnect (PCI) bus, HyperTransport or industry standard architecture (ISA) bus, small computer system interface (SCSI) bus, universal serial bus (USB), or Institute of Electrical and Electronics Engineers (IEEE) standard 1394 bus (sometimes referred to as "Firewire"). In alternative embodiments, some or all of the aforementioned components may be connected to each other directly, rather than through a bus system.

The mass storage device 93 may be, or may include, any one or more devices suitable for storing large volumes of data in a non-volatile manner, such as a magnetic disk or tape, magneto-optical (MO) storage device, or any of various types of Digital Versatile Disk (DVD) or Compact Disk (CD) based storage, or a combination of such devices.

The communication device 94 is a device suitable for enabling the processing system to communicate data with a remote processing system over a communication link 98, and may be, for example, a conventional telephone modem, a wireless modem, an Integrated Services Digital Network (ISDN) adapter, a Digital Subscriber Line (DSL) modem, a cable modem, a radio transceiver, a satellite transceiver, an Ethernet adapter, or the like.

The I/O devices 95 may include, for example, one or more devices such as: a pointing device such as a mouse, trackball, touchpad, or the like; a keyboard; audio speakers; and/or a display device such as a cathode ray tube (CRT), a liquid crystal display (LCD), or the like. However, such VO devices may be omitted in a system that operates exclusively as a server and provides no direct user interface. Other variations upon the illustrated set of components can be implemented in a manner consistent with the invention.

Software (including instructions and data) 97 to implement the techniques described above may be stored in one or more of ROM 91, RAM 92, and mass storage device 93. In certain embodiments, the software 97 may be initially provided to the processing system by downloading it from a remote system through the communication device 94.

Thus, a method and apparatus have been described for searching for and locating device capabilities Information in an environment in which exact matches of identifying information are infrequent. Although the present invention has been described with reference to specific exemplary embodiments, it will be recognized that the invention is not limited to the embodiments described, but can be practiced with modification and alteration within the spirit and scope of the appended claims. Accordingly, the specification and drawings are to be regarded in an illustrative sense rather than a restrictive sense.

### THE FOLLOWING STATEMENTS CONCERN VARIOUS EMBODIMENTS OF THE INVENTION

A. A method of determining device capabilities of a client device on a network, the method comprising:
identifying a predetermined header in a request from the client device;
using at least a portion of the header as an attribute identifier of the request;
searching in a database for an identifier that matches the attribute identifier;
if an exact match of the attribute identifier is found in the database, then taking a set of stored device capabilities associated with the attribute identifier to be the device capabilities of the client device;
if no exact match of the attribute identifier is found, then searching in the database for an identifier that approximately matches the attribute identifier; and
if an identifier that approximately matches the attribute identifier is found in the database, then taking a set of stored device capabilities associated with the identifier that approximately matches the attribute identifier to be the device capabilities of the client device, including storing in the database, in association with the attribute identifier, the set of device capabilities associated with the identifier that approximately matches the attribute identifier

B. A method as recited in statement A, wherein said storing comprises:
storing, in the database, a device identifier of the client device in association with the set of device capabilities associated with the identifier that approximately matches the attribute identifier.

C. A method as recited in statement B, further comprising adding a capability of the client device specified in the request to the set of stored device capabilities, in association with the client device.

D. A method as recited in statement B, further comprising:
determining whether a session identifier is associated with the request, prior to said searching for an identifier that matches the attribute identifier;
wherein said searching for an identifier that matches the attribute identifier is done only upon determining that no session identifier is associated with the request.

E. A method as recited in statement D, further comprising, is a session identifier is determined to be associated with the request, then:
using the session identifier to look up a set of stored device capabilities associated with the session identifier; and
taking the set of stored device capabilities associated with the session identifier to be the device capabilities of the client device.

F. A method as recited in statement A, further comprising, if the request is determined not to include a predetermined header, then:
determining a user identifier associated with the request;
determining whether a set of stored device capabilities is associated with the user identifier; and
if a set of stored device capabilities is determined to be associated with the user identifier, then taking the set of stored device capabilities associated with the user identifier to be the device capabilities of the client device.

G. A method as recited in statement A, wherein the database comprises a cache and a primary storage.

H. A method as recited in statement G, wherein said searching in a database for an identifier that matches the attribute identifier comprises:
searching for an identifier that matches the attribute identifier in the cache; and
if an identifier that matches the attribute identifier is not found in the cache, then searching for an identifier that matches the attribute identifier in the primary storage.

I. A method as recited in statement H, wherein said storing comprises:
storing, in both the primary storage and the cache, in association with the attribute identifier, the set of device capabilities associated with the identifier that approximately matches the attribute identifier.

J. A method of determining device capabilities of a client device on a network, the method comprising:
receiving a request from the client device;
determining whether a session identifier is associated with the request;
if a session identifier is determined to be associated with the request, using the session identifier to look up a set of stored device capabilities associated with the session identifier, and taking the set of stored device capabilities to represent the device capabilities of the client device;
if no session identifier is determined to be associated with the request, then determining whether the request includes a predetermined header;
if the request is determined to include the predetermined header, then using at least a portion of the header as an attribute identifier of the request,
   searching for an identifier that matches the attribute identifier in a cache and, if not found in the cache, in a primary storage,
   if an exact match of the attribute is found in either the cache or the primary storage, then taking a set of stored device capabilities associated with the attribute identifier to be the device capabilities of the client device, and
   if no exact match of the attribute identifier is found in either the cache or the primary storage, then searching for an identifier that approximately matches the attribute identifier in the primary storage;
   if an identifier that approximately matches the attribute identifier is found in the primary storage, then taking a set of stored device capabilities associated with the identifier that approximately matches the attribute identifier to be the device capabilities of the client device, including storing in the primary storage and the cache, the set of device capabilities associated with the identifier that approximately matches the attribute identifier, in association with the attribute identifier;
if the request is determined not to include a predetermined header, then:
   determining a user identifier associated with the request,
   determining whether a set of stored device capabilities is associated with the user identifier, and
   if a set of stored device capabilities is determined to be associated with the user identifier, then taking the set of stored device capabilities associated with the user identifier to be the device capabilities of the client device; and
if no set of stored device capabilities is determined to be associated with the user identifier, then determining the device capabilities of the client device by interrogating a user of the client device.

K. A method as recited in statement J, further comprising:
identifying a capability of the client device specified in the request; and
adding the capability specified in the request to the set of device capabilities associated with the identifier that approximately matches the attribute identifier, in association with the client device.

L. A system comprising:
a request router to receive and route a request from a client device on a network;
a database coupled to the request router and containing device capabilities information for a plurality of devices on the network; and
a device capability manager, coupled to the request router, to:
   use information associated with the request as a first request attribute identifier to search for the first request attribute identifier in the database, and if the first request attribute identifier is not found, to
   identify a stored second request attribute identifier that only partially matches the first request attribute identifier, and
   associate with the client device a set of stored device capabilities associated with the second request attribute identifier.

M. A system as recited in statement L, wherein the device capability manager further is to associate said set of stored device capabilities with a device identifier of the client device.

N. A system as recited in statement L, wherein information associated with the request is from a header of the request.

O. A system as recited in statement L, wherein the device capability manager further is to:
identify a capability of the client device specified in the request; and
add the capability specified in the request to the set of stored device capabilities in association with the client device.

P. A system as recited in statement L, wherein the database comprises a cache and a primary storage

Q. A system as recited in statement P, wherein the device manager is to use the information associated with the request to search for the first request attribute identifier by:
first searching for the first request attribute identifier in the cache; and
if the first request attribute identifier is not found in the cache, then searching for the first request attribute identifier in the primary storage.

R. A system as recited in statement Q, wherein the device manager is to associate with the client device the set of stored device capabilities associated with the second request attribute identifier by:
storing, in the cache and the primary storage, a device identifier of the client device in association with the set of device capabilities associated with the second request attribute identifier.

S. A system as recited in statement L, further comprising:
a session manager to manage sessions of the devices on the network, including assigning a session identifier to each session;
wherein the device capabilities manager further is to determine whether a session identifier is associated with the request from the client device prior to the search for the first request attribute identifier; and
wherein the search for the first request attribute identifier is done only upon determining that no session identifier is associated with the request.

T. A system as recited in statement S, wherein the device capabilities manager further is to:
if a session identifier is determined to be associated with the request, use the session identifier to look up a set of stored device capabilities associated with the session identifier, and take the set of stored device capabilities associated with the session identifier to be the device capabilities of the client device.

U. A system as recited in statement L, further comprising:
a user manager to authenticate users of the devices on the network, including storing user identifiers associated with the users;
wherein the device capabilities manager further is to
receive a user identifier associated with a request from one of the devices on the network,
determine whether the database includes a set of stored device capabilities associated with the user identifier, and
if the database includes a set of stored device capabilities associated with the user identifier, to take the set of stored device capabilities associated with the user identifier to be the device capabilities of said one of the devices.

V. A processing system comprising:
a processor;
a data communication device to communicate data via a network; and
a storage device storing instructions which, when executed by the processor, cause the processing system to execute a process of determining device capabilities of a client device on the network, the process comprising
   identifying a predetermined header in a request from the client device,
   using at least a portion of the header as an attribute identifier of the request,
   searching in a database for an identifier that matches the attribute identifier,
   if an exact match of the attribute identifier is found in the database, then taking a set of stored device capabilities associated with the attribute identifier to be the device capabilities of the client device,
   if no exact match of the attribute identifier is found, then searching in the database for an identifier that approximately matches the attribute identifier, and
   if an identifier that approximately matches the attribute identifier is found in the database, then taking a set of stored device capabilities associated with the identifier that approximately matches the attribute identifier to be the device capabilities of the client device, including storing in the database, in association with the attribute identifier, the set of device capabilities associated with the identifier that approximately matches the attribute identifier.

W. An apparatus comprising:
means for receiving a request from a client device on a network; and
means for identifying, in response to the request, device capabilities of the client device by using information which neither specifies device capabilities nor directly identifies the client device to associate a set of stored device capabilities with the client device.

## Claims

1. A method comprising:
receiving a request from a client device on a network; and
in response to the request, identifying device capabilities of the client device by using information which neither specifies device capabilities nor directly identifies the client device to associate a set of stored device capabilities with the client device.

2. A method as recited in claim 1, wherein said identifying device capabilities of the client device comprises:
using information from the request as a first identifier to search for the first identifier in a database; and if the first identifier is not found,
identifying a stored second identifier that only partially matches the first identifier.
and associating with the client device a set of stored device capabilities that are associated with the second identifier.

3. A method as recited in claim 2, further comprising associating said set of stored device capabilities with a device identifier of the client device.

4. A method as recited in claim 2, wherein information from the request is from a header of the request.

5. A method as recited in claim 2, further comprising:
identifying a capability of the client device specified in the request; and
adding the capability specified in the request to the set of stored device capabilities in association with the client device.

6. A method as recited in claim 1, wherein said identifying device capabilities of the client device comprises:
searching a database for an identifier associated with the client device using information from the request as a search criterion; and
if no exact match of the search criterion is found but an identifier which approximately matches the search criterion is found, then associating with the client device a stored set of device capabilities associated with the identifier that approximately matches the search criterion.

7. A method as recited in claim 6, wherein the information from the request is from a header of the request.

8. A method as recited in claim 6, wherein said identifying device capabilities of the client device comprises, if an exact match of the search criterion is found, using a device capabilities set associated with the identifier that matches the search criterion as the device capabilities of the client device.

9. A method as recited in claim 6, wherein the database comprises a cache and a primary storage.

10. A method as recited in claim 9, wherein said searching in a database for an identifier comprises:
first searching for the identifier in the cache; and
if the identifier is not found in the cache, then searching for the identifier in the primary storage.

11. A method as recited in claim 10, wherein said associating with the client device a stored set of device capabilities comprises:
storing, in the cache and the primary storage, a device identifier of the client device in association with the set of device capabilities associated with the identifier that approximately matches the search criterion.

12. A system comprising:
a request router to receive and route a request from a client device on a network;
a database coupled to the request router and containing device capabilities information for a plurality of devices on the network; and
a device capability manager, coupled to the request router, to:
use information associated with the request as a first request attribute identifier to search for the first request attribute identifier in the database, and if the first request attribute identifier is not found, to
identify a stored second request attribute identifier that only partially matches the first request attribute identifier, and
associate with the client device a set of stored device capabilities associated with the second request attribute identifier.
